(19) **Europäisches Patentamt / European Patent Office / Office européen des brevets**

(11) **EP 4 206 760 A1**

(12) # EUROPEAN PATENT APPLICATION
published in accordance with Art. 153(4) EPC

(43) Date of publication:
**05.07.2023 Bulletin 2023/27**

(21) Application number: **21879118.4**

(22) Date of filing: **24.08.2021**

(51) International Patent Classification (IPC):
**G02B 6/00** (2006.01)  **G02B 5/18** (2006.01)
**G02B 27/01** (2006.01)

(52) Cooperative Patent Classification (CPC):
**G02B 5/18; G02B 6/00; G02B 27/01**

(86) International application number:
**PCT/CN2021/114215**

(87) International publication number:
**WO 2022/078072 (21.04.2022 Gazette 2022/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **13.10.2020  CN 202011091220**
**13.10.2020  CN 202022275408 U**

(71) Applicant: **GUANGDONG OPPO MOBILE TELECOMMUNICATIONS CORP., LTD.**
**Dongguan, Guangdong 523860 (CN)**

(72) Inventor: **ZHENG, Guang**
**Dongguan, Guangdong 523860 (CN)**

(74) Representative: **Taor, Simon Edward William**
**Venner Shipley LLP**
**200 Aldersgate**
**London EC1A 4HD (GB)**

(54) **DIFFRACTION GRATING STRUCTURE, IMAGING DEVICE, AND WEARABLE DEVICE**

(57)     Provided are a diffraction grating structure (100), an imaging device (1000), and a wearable apparatus (2000). The diffraction grating structure (100) includes a waveguide sheet (10), a couple-in grating (20), a couple-out grating (30), and a functional layer (40). The couple-in grating (20) is configured to couple light in the waveguide sheet (10). Each of the waveguide sheet (10) and the couple-out grating (30) is configured to couple the light out to the functional layer (40). The functional layer (40) is configured to refract the light to an ambient environment and increase a light-outcoupling rate of the couple-out grating (30).

FIG. 1

EP 4 206 760 A1

**Description**

**PRIORITY INFORMATION**

The present application claims priorities to and benefits of Chinese Patent Applications No. 202011091220.1 and No. 202022275408.3, filed with China National Intellectual Property Administration on October 13, 2020, the entire contents of which are incorporated herein by reference.

**FIELD**

The present disclosure relates to the field of diffractive waveguide technologies, and more particularly, to a diffraction grating structure, an imaging device, and a wearable apparatus.

**BACKGROUND**

Nowadays, Augmented Reality (AR) technology is widely used in industries like education, healthcare, and entertainment. A main feature thereof is a combination of a virtual image and a real scene, ensuring that the virtual image and the real scene can be viewed simultaneously.

**SUMMARY**

Embodiments of the present disclosure provide a diffraction grating structure, an imaging device, and a wearable apparatus.

According to the embodiments of the present disclosure, the diffraction grating structure includes a waveguide sheet, a couple-in grating, a couple-out grating, and a functional layer. The couple-in grating is disposed at a first end of the waveguide sheet and includes a tilted grating. The couple-out grating is disposed at a second end of the waveguide sheet and includes a blazed grating. The first end and the second end are two opposite ends of the waveguide sheet. The functional layer is disposed on the couple-out grating. The couple-in grating is configured to couple light in the waveguide sheet. The waveguide sheet is configured to transmit the light coupled in the waveguide sheet by the couple-in grating to the couple-out grating. The couple-out grating is configured to couple the light in the waveguide sheet out to the functional layer. The functional layer is configured to refract the light coupled out by the couple-out grating to an ambient environment and increase a light-outcoupling rate of the couple-out grating.

According to the embodiments of the present disclosure, the imaging device includes a diffraction grating structure, an image generation module, and an optical module. The diffraction grating structure includes a waveguide sheet, a couple-in grating, a couple-out grating, and a functional layer. The couple-in grating is disposed at a first end of the waveguide sheet and includes a tilted grating. The couple-out grating is disposed at a second end of the waveguide sheet and includes a blazed grating. The first end and the second end are two opposite ends of the waveguide sheet. The functional layer is disposed on the couple-out grating. The couple-in grating is configured to couple light in the waveguide sheet. The waveguide sheet is configured to transmit the light coupled in the waveguide sheet by the couple-in grating to the couple-out grating. The couple-out grating is configured to couple the light in the waveguide sheet out to the functional layer. The functional layer is configured to refract the light coupled out by the couple-out grating to an ambient environment and increase a light-outcoupling rate of the couple-out grating. The image generation module is opposite to the couple-in grating and configured to emit light towards the couple-in grating. The optical module is disposed between the image generation module and the couple-in grating, and configured to adjust the light emitted by the image generation module into parallel light at a predetermined angle to the couple-in grating.

According to the embodiments of the present disclosure, the wearable apparatus includes a housing and an imaging device. The imaging device is disposed on the housing. The imaging device includes a diffraction grating structure, an image generation module, and an optical module. The diffraction grating structure includes a waveguide sheet, a couple-in grating, a couple-out grating, and a functional layer. The couple-in grating is disposed at a first end of the waveguide sheet and includes a tilted grating. The couple-out grating is disposed at a second end of the waveguide sheet and includes a blazed grating. The first end and the second end are two opposite ends of the waveguide sheet. The functional layer is disposed on the couple-out grating. The couple-in grating is configured to couple light in the waveguide sheet. The waveguide sheet is configured to transmit the light coupled in the waveguide sheet by the couple-in grating to the couple-out grating. The couple-out grating is configured to couple the light in the waveguide sheet out to the functional layer. The functional layer is configured to refract the light coupled out by the couple-out grating to an ambient environment and increase a light-outcoupling rate of the couple-out grating. The image generation module is opposite to the couple-in grating and configured to emit light towards the couple-in grating. The optical module is disposed between the image generation module and the couple-in grating, and configured to adjust the light emitted by the image generation module into parallel light at a predetermined angle to the couple-in grating.

Additional aspects and advantages of embodiments of the present disclosure will be provided at least in part in the following description, or will become apparent at least in part from the following description, or can be learned from practicing of the embodiments of the present disclosure.

## BRIEF DESCRIPTION OF THE DRAWINGS

The above and/or additional aspects and advantages of the present disclosure will become more apparent and more understandable from the following description of embodiments taken in conjunction with the accompanying drawings, in which:

FIG. 1 is a structural schematic diagram of a diffraction grating structure according to some embodiments of the present disclosure.

FIG. 2 is a structural schematic diagram of a couple-out grating of a diffraction grating structure according to some embodiments of the present disclosure.

FIG. 3 is a schematic diagram of diffraction efficiency of a couple-out grating at different incidence angles and different diffraction orders in the related art.

FIG. 4 is a schematic diagram of diffraction efficiency of different wavelengths of a couple-out grating at +1 diffraction order in the related art.

FIG. 5 is a schematic diagram of diffraction uniformity of a couple-out grating at different incidence angles and +1 diffraction order in the related art.

FIG. 6 is a schematic diagram of diffraction efficiency of a couple-out grating at different incidence angles and different diffraction orders according to some embodiments of the present disclosure, when a functional layer of a diffraction grating structure is made of titanium oxide.

FIG. 7 is a schematic diagram of diffraction efficiency of different wavelengths of a couple-out grating at +1 diffraction order according to some embodiments of the present disclosure, when a functional layer of a diffraction grating structure is made of titanium oxide.

FIG. 8 is a schematic diagram of diffraction uniformity of a couple-out grating at different incidence angles and +1 diffraction order according to some embodiments of the present disclosure, when a functional layer of a diffraction grating structure is made of titanium oxide.

FIG. 9 is a schematic diagram of diffraction efficiency of a couple-out grating at different incidence angles and different diffraction orders according to some embodiments of the present disclosure, when a functional layer of a diffraction grating structure is made of zirconium oxide.

FIG. 10 is a schematic diagram of diffraction efficiency of different wavelengths of a couple-out grating at +1 diffraction order according to some embodiments of the present disclosure, when a functional layer of a diffraction grating structure is made of zirconium oxide.

FIG. 11 is a schematic diagram of diffraction uniformity of a couple-out grating at different incidence angles and +1 diffraction order according to some embodiments of the present disclosure, when a functional layer of a diffraction grating structure is made of zirconium oxide.

FIG. 12 is a structural schematic diagram of an imaging device according to some embodiments of the present disclosure.

FIG. 13 is a structural schematic diagram of an imaging device according to some embodiments of the present disclosure.

FIG. 14 is a structural schematic diagram of an imaging device according to some embodiments of the present disclosure.

FIG. 15 is a structural schematic diagram of a wearable apparatus according to some embodiments of the present disclosure.

## DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

According to the embodiments of the present disclosure, a diffraction grating structure includes a waveguide sheet, a couple-in grating, a couple-out grating, and a functional layer. The couple-in grating is disposed at a first end of the waveguide sheet and includes a tilted grating. The couple-out grating is disposed at a second end of the waveguide sheet and includes a blazed grating. The first end and the second end are two opposite ends of the waveguide sheet.

The functional layer is disposed on the couple-out grating. The couple-in grating is configured to couple light in the waveguide sheet. The waveguide sheet is configured to transmit the light coupled in the waveguide sheet by the couple-in grating to the couple-out grating. The couple-out grating is configured to couple the light in the waveguide sheet out to the functional layer. The functional layer is configured to refract the light coupled out by the couple-out grating to an ambient environment and increase a light-outcoupling rate of the couple-out grating.

In some embodiments, a period of the couple-out grating ranges from 300 nm to 500 nm.

In some embodiments, a blaze angle of the couple-out grating ranges from 5 degrees to 40 degrees.

In some embodiments, an anti-blaze angle of the couple-out grating ranges from 50 degrees to 85 degrees.

In some embodiments, the functional layer includes a high refractive index film layer. A refractive index of the functional layer is greater than or equal to 1.8; and/or a thickness of the functional layer ranges from 20 nm to 150 nm.

In some embodiments, the functional layer includes a titanium oxide film layer or a zirconium oxide film layer.

In some embodiments, when the functional layer includes the titanium oxide film layer, the thickness of the functional layer is 90 nm.

In some embodiments, when the functional layer includes the zirconium oxide film layer, the thickness of the functional layer is 110 nm.

In some embodiments, the diffraction grating structure includes three layers of waveguide sheets. The couple-in grating and the couple-out grating are distributed at two ends of each of the three layers of waveguide sheets, respectively. The couple-in grating and the couple-out grating on each of the three layers of waveguide sheets are configured to diffract and reflect one of red light, green light, and blue light, to allow the couple-in gratings and the couple-out gratings on the three layers of waveguide sheets to diffract and reflect red light, green light, and blue light, respectively.

In some embodiments, the diffraction grating structure includes two layers of waveguide sheets. The couple-in grating and the couple-out grating are distributed at two ends of each of the two layers of waveguide sheets, respectively. The couple-in grating and the couple-out grating on one layer of the two layers of waveguide sheets are configured to diffract and reflect one of red light, green light, and blue light. The couple-in grating and the couple-out grating on the other layer of the two layers of waveguide sheets are configured to diffract and reflect remaining two of red light, green light, and blue light.

In some embodiments, the diffraction grating structure includes one layer of waveguide sheets. The couple-in grating and the couple-out grating are distributed at two ends of the one layer of waveguide sheet, respectively, and configured to diffract and reflect red light, green light, and blue light.

In some embodiments, the couple-in grating and the couple-out grating are disposed on the same side of the waveguide sheet.

In some embodiments, the couple-in grating and the couple-out grating are disposed on different sides of the waveguide sheet.

According to the embodiments of the present disclosure, an imaging device includes a diffraction grating structure, an image generation module, and an optical module. The diffraction grating structure includes a waveguide sheet, a couple-in grating, a couple-out grating, and a functional layer. The couple-in grating is disposed at a first end of the waveguide sheet and includes a tilted grating. The couple-out grating is disposed at a second end of the waveguide sheet and includes a blazed grating. The first end and the second end are two opposite ends of the waveguide sheet. The functional layer is disposed on the couple-out grating. The couple-in grating is configured to couple light in the waveguide sheet. The waveguide sheet is configured to transmit the light coupled in the waveguide sheet by the couple-in grating to the couple-out grating. The couple-out grating is configured to couple the light in the waveguide sheet out to the functional layer. The functional layer is configured to refract the light coupled out by the couple-out grating to an ambient environment and increase a light-outcoupling rate of the couple-out grating. The image generation module is opposite to the couple-in grating and configured to emit light towards the couple-in grating. The optical module is disposed between the image generation module and the couple-in grating, and configured to adjust the light emitted by the image generation module into parallel light at a predetermined angle to the couple-in grating.

In some embodiments, a period of the couple-out grating ranges from 300 nm to 500 nm.

In some embodiments, a blaze angle of the couple-out grating ranges from 5 degrees to 40 degrees.

In some embodiments, an anti-blaze angle of the couple-out grating ranges from 50 degrees to 85 degrees.

In some embodiments, the functional layer includes a high refractive index film layer. A refractive index of the functional layer is greater than or equal to 1.8; and/or a thickness of the functional layer ranges from 20 nm to 150 nm.

In some embodiments, the functional layer includes a titanium oxide film layer or a zirconium oxide film layer.

In some embodiments, when the functional layer includes the titanium oxide film layer, the thickness of the functional layer is 90 nm.

In some embodiments, when the functional layer includes the zirconium oxide film layer, the thickness of the functional layer is 110 nm.

In some embodiments, the diffraction grating structure includes three layers of waveguide sheets. The couple-in grating and the couple-out grating are distributed at two ends of each of the three layers of waveguide sheets, respectively. The couple-in grating and the couple-out grating on each of the three layers of waveguide sheets are configured to diffract and reflect one of red light, green light, and blue light, to allow the couple-in gratings and the couple-out gratings on the three layers of waveguide sheets to diffract and reflect red light, green light, and blue light, respectively.

In some embodiments, the diffraction grating structure includes two layers of waveguide sheets. The couple-in grating and the couple-out grating are distributed at two ends of each of the two layers of waveguide sheets, respectively. The couple-in grating and the couple-out grating on one layer of the two layers of waveguide sheets are configured to diffract and reflect one of red light, green light, and blue light. The couple-in grating and the couple-out grating on the other layer of the two layers of waveguide sheets are configured to diffract and reflect remaining two of red light, green light, and blue light.

In some embodiments, the diffraction grating structure includes one layer of waveguide sheets. The couple-in grating and the couple-out grating are distributed at two ends of the one layer of waveguide sheet, respectively, and configured to diffract and reflect red light, green light, and blue light.

In some embodiments, the couple-in grating and the couple-out grating are disposed on a same side of the waveguide sheet.

In some embodiments, the couple-in grating and the couple-out grating are disposed on different sides of the waveguide sheet.

According to the embodiments of the present disclosure, a wearable apparatus includes a housing and an imaging device. The imaging device is disposed on the housing. The imaging device includes a diffraction grating structure, an image generation module, and an optical module. The diffraction grating structure includes a waveguide sheet, a couple-in grating, a couple-out grating, and a functional layer. The couple-in grating is disposed at a first end of the waveguide sheet and includes a tilted grating. The couple-out grating is disposed at a second end of the waveguide sheet and includes a blazed grating. The first end and the second end are two opposite ends of the waveguide sheet. The functional layer is disposed on the couple-out grating. The couple-in grating is configured to couple light in the waveguide sheet. The waveguide sheet is configured to transmit the light coupled in the waveguide sheet by the couple-in grating to the couple-out grating. The couple-out grating is configured to couple the light in the waveguide sheet out to the functional layer. The functional layer is configured to refract the light coupled out by the couple-out grating to an ambient environment and increase a light-outcoupling rate of the couple-out grating. The image generation module is opposite to the couple-in grating and configured to emit light towards the couple-in grating. The optical module is disposed between the image generation module and the couple-in grating, and configured to adjust the light emitted by the image generation module into parallel light at a predetermined angle to the couple-in grating.

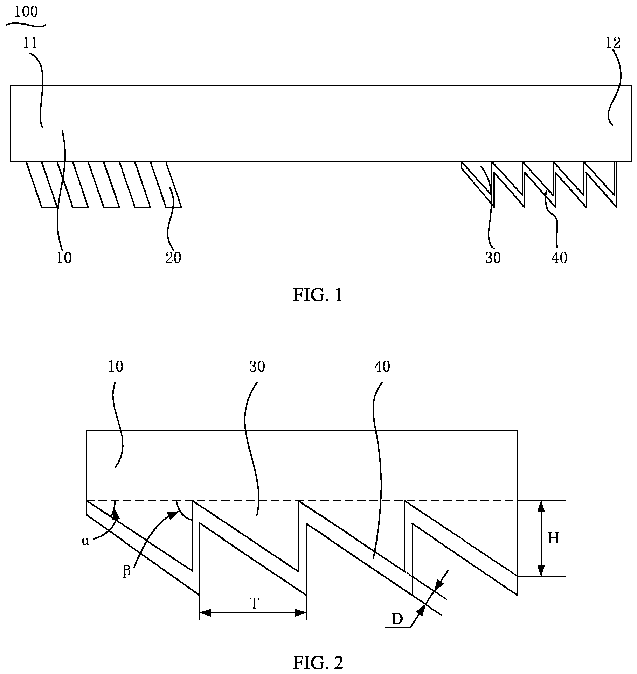

With reference to FIG. 1, the embodiments of the present disclosure provide a diffraction grating structure 100. The diffraction grating structure 100 includes a waveguide sheet 10, a couple-in grating 20, a couple-out grating 30, and a functional layer 40. The couple-in grating 20 is disposed at a first end 11 of the waveguide sheet 10 and includes a tilted grating. The couple-out grating 30 is disposed at a second end 12 of the waveguide sheet 10 and includes a blazed grating. The first end 11 and the second end 12 are two opposite ends of the waveguide sheet 10. The functional layer 40 is disposed on the couple-out grating 30. The couple-in grating 20 is configured to couple light in the waveguide sheet 10. The waveguide sheet 10 is configured to transmit the light coupled in the waveguide sheet 10 by the couple-in grating 20 to the couple-out grating 30. The couple-out grating 30 is configured to couple the light in the waveguide sheet 10 out to the functional layer 40. The functional layer 40 is configured to refract the light coupled out by the couple-out grating 30 to an ambient environment and increase a light-outcoupling rate of the couple-out grating 30.

Currently, the virtual images produced by the AR technology often have non-uniform brightness distribution. Therefore, it is urgent to improve the uniformity of the brightness distribution of the virtual images.

In the diffraction grating structure 100 according to the embodiments of the present disclosure, the functional layer 40 is disposed on the blazed grating to refract the light coupled out by the couple-out grating 30 to the ambient environment and increase the light-outcoupling rate of the couple-out grating 30, and cooperates with the waveguide sheet 10 and the couple-in grating 20 to transmit the light. Therefore, the diffraction efficiency of the diffraction grating structure 100 is increased, and a uniformity error of the diffraction grating structure 100 is lowered, thereby resulting in a uniform brightness distribution of the generated virtual images.

The couple-in grating 20 may be a tilted grating as illustrated on a left side of FIG. 1 or a blazed grating as illustrated on a right side of FIG. 1. The couple-out grating 30 may be the blazed grating as illustrated on the right side of FIG. 1 or the tilted grating as illustrated on the left side of FIG. 1. That is, both the couple-in grating 20 and the couple-out grating 30 may be the tilted gratings, or they may both be the blazed gratings, or one of the couple-in grating 20 and the couple-out grating 30 may be the tilted grating and the other one may be the blazed grating. In the present disclosure, as an example, the couple-in grating 20 is the tilted grating, and the couple-out grating is the blazed grating. It should be understood that, the diffraction grating structure 100 is not limited to such a structure.

With reference to FIG. 2, in some embodiments, period T of the couple-out grating 30 ranges from 300 nm to 500 nm. That is, period T of the couple-out grating 30 is greater than 300 nm and smaller than or equal to 500 nm. A blaze angle $\alpha$ of the couple-out grating 30 ranges from 5 degrees to 40 degrees. That is, blaze angle $\alpha$ of the couple-

out grating 30 is greater than or equal to 5 degrees and smaller than or equal to 40 degrees. An anti-blaze angle β of the couple-out grating 30 ranges from 50 degrees to 85 degrees. That is, anti-blaze angle β of the couple-out grating 30 is greater than or equal to 50 degrees and smaller than or equal to 85 degrees.

In some embodiments, the period T of the couple-out grating 30 may be any value between 300 nm and 500 nm. For example, the period T of the couple-out grating 30 may be any one of 300 nm, 330 nm, 350 nm, 370 nm, 390 nm, 410 nm, 430 nm, 450 nm, 470 nm, 490 nm, and 500 nm, or may be any other value between 300 nm and 500 nm.

The blaze angle α of the couple-out grating 30 may be any value between 5 degrees and 40 degrees. For example, the blaze angle α of the couple-out grating 30 may be any one of 5 degrees, 10 degrees, 17 degrees, 20 degrees, 25 degrees, 27 degrees, 30 degrees, 35 degrees, 37 degrees, and 40 degrees, or may be any other value between 5 degrees and 40 degrees.

The anti-blaze angle β of the couple-out grating 30 may be any value between 50 degrees and 85 degrees. For example, the anti-blaze angle β of the couple-out grating 30 may be any one of 50 degrees, 53 degrees, 55 degrees, 60 degrees, 65 degrees, 68 degrees, 75 degrees, 80 degrees, 83 degrees, and 85 degrees, or may be any other value between 50 degrees and 85 degrees.

In an embodiment, the period T of the couple-out grating 30 is 370 nm, the blaze angle α of the couple-out grating 30 is 37 degrees, the anti-blaze angle β of the couple-out grating 30 is 85 degrees. A depth H of the couple-out grating 30 can be calculated to be 261 nm based on the period T, blaze angle α, and anti-blaze angle β of the couple-out grating 30.

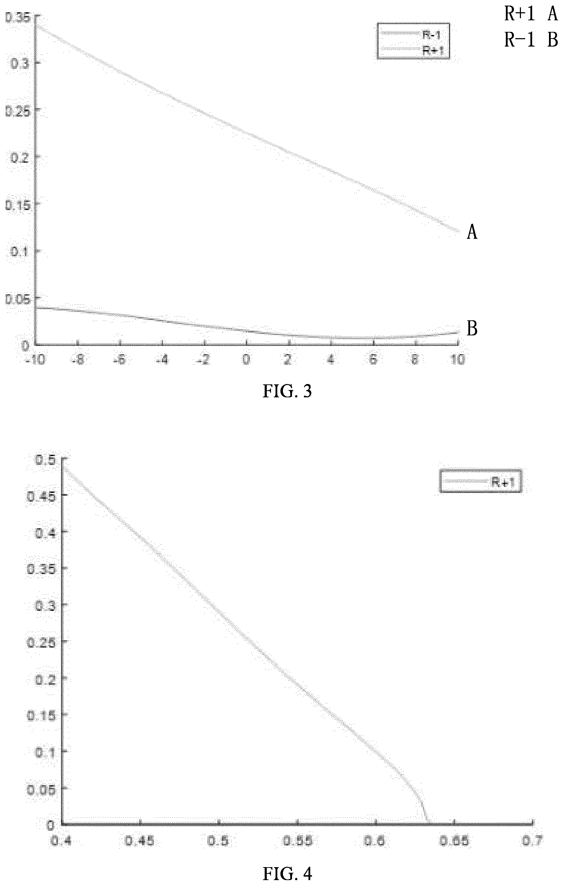

With reference to FIG. 3 to FIG. 5, it is assumed that no functional layer 40 is disposed on the diffraction grating structure 100, the period T of the couple-out grating 30 is 370 nm, the blaze angle α of the couple-out grating 30 is 37 degrees, the anti-blaze angle β of the couple-out grating 30 is 85 degrees, and the depth H of the couple-out grating 30 is 261 nm. With reference to FIG. 3, the abscissa represents an incidence angle, and the ordinate represents diffraction efficiency. FIG. 3 reveals that the diffraction efficiency is negatively correlated with the incidence angle as the incidence angle varies from -10 degrees to +10 degrees. With reference to FIG. 4, the abscissa represents a light wavelength, and the ordinate represents the diffraction efficiency. FIG. 4 reveals that, the diffraction efficiency is also negatively correlated with the wavelength as the wavelength varies from 400 nm to 700 nm. In addition, the diffraction efficiency is very sensitive to changes of the incidence angle and the wavelength. Such an efficiency distribution relationship will not only increase a design difficulty of the diffraction grating structure, but also result in a non-uniform brightness distribution of a virtual image observed by a user.

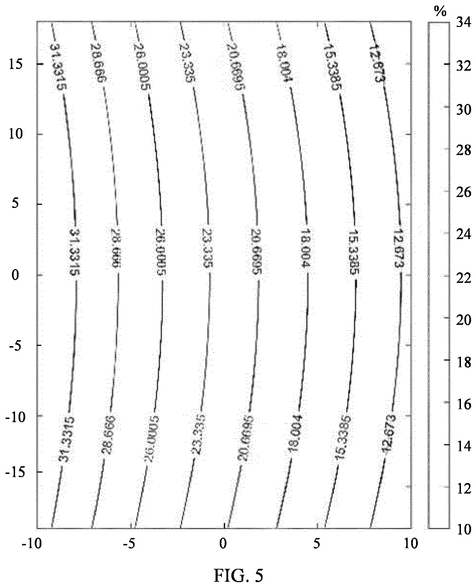

With reference to FIG. 5, the abscissa represents a field-of-view distribution in a grating vector direction, specifically, from -10 degrees to +10 degrees, and the ordinate represents a field-of-view distribution perpendicular to the grating vector direction, specifically, from -18 degrees to +18 degrees. FIG. 5 reveals that, the maximum diffraction efficiency is 34%, and the minimum diffraction efficiency is 10%. Thus, based on a formula

$$\text{uniformity error} = \frac{\text{maximum efficiency} - \text{minimum efficiency}}{\text{maximum efficiency} + \text{minimum efficiency}}$$, the uniformity error of the couple-out grating of the diffraction grating structure without the functional layer 40 can be calculated to be 0.55. Generally, with a decrease in the uniformity error, the uniformity of the field of view becomes better. However, the uniformity of the brightness distribution of the virtual image may be affected when the diffraction grating structure without the functional layer 40 has the uniformity error of 0.55. To generate a virtual image having a uniform brightness distribution, the diffraction efficiency of the diffraction grating structure 100 needs to be enhanced, and the uniformity error of the diffraction grating structure 100 needs to be lowered.

Further referring to FIG. 2, in the diffraction grating structure 100 according to the embodiments of the present disclosure, the functional layer 40 is a high refractive index film layer disposed on the couple-out grating 30. In some embodiments, a refractive index n of the functional layer 40 is greater than or equal to 1.8. A thickness D of the functional layer 40 ranges from 20 nm to 150 nm. That is, thickness D of the functional layer 40 is greater than or equal to 20 nm and smaller than or equal to 150 nm.

In some embodiments, the refractive index n of the functional layer 40 may be any value greater than or equal to 1.8. For example, the refractive index n of the functional layer 40 may be any one of 1.8, 1.9, 2.0, 2.1, 2.2, 2.3, 2.4, 2.5, 2.6, 2.7, 2.8, 2.9, and 3.0, or any other value greater than 1.8.

In some further embodiments, the thickness D of the functional layer 40 may be any value between 20 nm and 150 nm. For example, the thickness D of the functional layer 40 may be any one of 20 nm, 30 nm, 40 nm, 50 nm, 60 nm, 70 nm, 80 nm, 90 nm, 100 nm, 110 nm, 120 nm, 130 nm, 140 nm, and 150 nm, or any other value between 20 nm and 150 nm. When the thickness D of the functional layer 40 is smaller than 20 nm, on the one hand, it is difficult to process and design the diffraction grating structure 100, and on the other hand, neither the diffraction efficiency of the diffraction grating structure 100 can be improved nor the uniformity error of the diffraction grating structure 100 can be reduced, leading to unsatisfying uniformity of the brightness distribution of the obtained virtual image. When the thickness D of the functional layer 40 is greater than 150 nm, it is easy to fill a gap between two triangles during processing, but the difficulty in processing is also increased. Therefore, when the thickness D of the functional layer 40 is between 20 nm and 150 nm, on one hand, the difficulty in processing the diffraction grating structure 100 can be reduced, and on the other hand, the diffraction efficiency of the diffraction grating structure 100 can be improved and the uniformity error of the diffraction grating structure 100 can also be reduced, leading to satisfying uniformity of the brightness distribution of the obtained virtual image (a specific analysis will be made below).

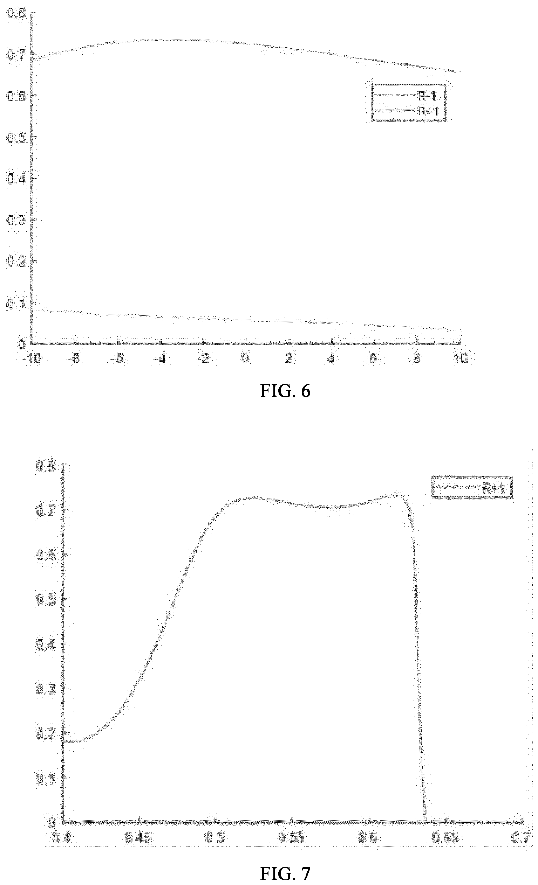

With reference to FIG. 6 to FIG. 8, in an embodiment, the functional layer 40 may be a titanium oxide film layer. In this case, the thickness D of the functional layer 40 is 90 nm. Similarly, the period T of the couple-out grating 30 is 370 nm, the blaze angle α of the couple-out grating 30 is 37 degrees, the anti-blaze angle β of the couple-out grating 30 is 85 degrees, and depth H of the couple-out grating 30 is 261 nm. With reference to FIG. 6, the abscissa represents the incidence angle, and the ordinate represents the diffraction efficiency. As can be seen from FIG. 6, a change trend of the diffraction efficiency at +1 diffraction order is relatively flat when the incidence angle varies from -10 degrees to +10 degrees, and the diffraction efficiency is greater than 65% when the incidence angle is 0 degree.

With reference to FIG. 7, the abscissa represents the light wavelength, and the ordinate represents the diffraction efficiency. As can be seen from FIG. 7, when the wavelength varies from 480 nm to 640 nm, a change trend of the diffraction efficiency is also relatively flat, and the diffraction efficiency is greater than 65%. Therefore, it can be obtained that the diffraction efficiency of the diffraction grating structure 100 is enhanced when the functional layer 40 is disposed on the couple-out grating 30.

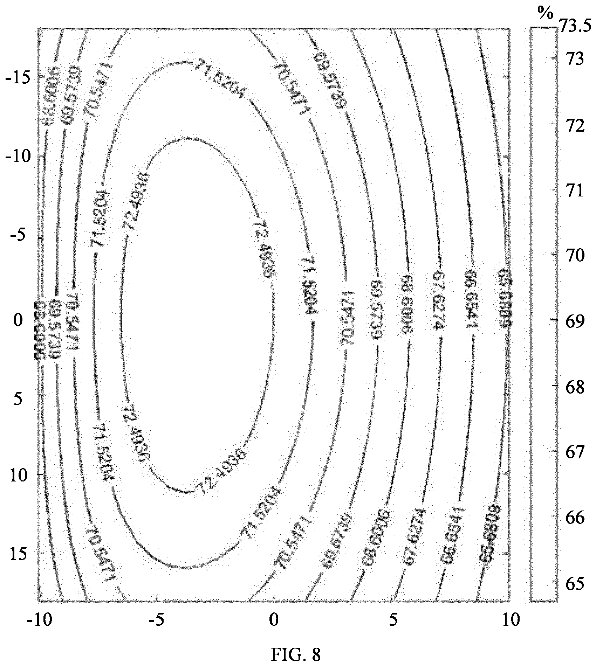

With reference to FIG. 8, the abscissa represents the field-of-view distribution in the grating vector direction, specifically, from -10 degrees to +10 degrees, and the ordinate represents the field-of-view distribution perpendicular to the grating vector direction, specifically, from -18 degrees to +18 degrees. FIG. 8 reveals that, the maximum diffraction efficiency is 73.5%, and the minimum diffraction efficiency is 65%. Thus, based on the equation:

$$\text{uniformity error} = \frac{\text{maximum efficiency} - \text{minimum efficiency}}{\text{maximum efficiency} + \text{minimum efficiency}}$$

, the uniformity error of the couple-out grating 30 of the diffraction grating structure 100 is 0.06 when the titanium oxide film layer serves as the functional layer. Compared with the diffraction grating structure without the functional layer 40, the couple-out grating 30 of the diffraction grating structure 100 adopting the titanium oxide film layer as the functional layer 40 has increased diffraction efficiency and lowered uniformity error. Thus, the uniformity of the brightness distribution of the generated virtual image can be improved.

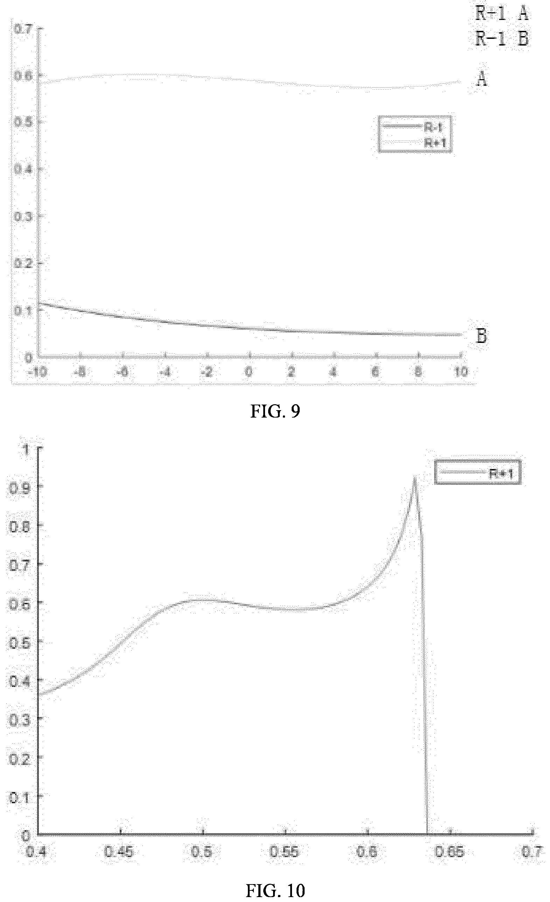

With reference to FIG. 9 to FIG. 11, in another embodiment, the functional layer 40 may be a zirconium oxide film layer. In this case, the thickness D of the functional layer 40 is 110 nm. Similarly, the period T of the couple-out grating 30 is 370 nm, the blaze angle α of the couple-out grating 30 is 37 degrees, the anti-blaze angle β of the couple-out grating 30 is 85 degrees, and the depth H of the couple-out grating 30 is 261 nm. With reference to FIG. 9, the abscissa represents the incidence angle, and the ordinate represents the diffraction efficiency. As can be seen from FIG. 9, when the incidence angle varies from -10 degrees to +10 degrees, the diffraction efficiency at the +1 diffraction order exhibits a flat trend, and the diffraction efficiency is greater than 55%.

With reference to FIG. 10, the abscissa represents the light wavelength, and the ordinate represents the diffraction efficiency. As can be seen from FIG. 10, when the wavelength varies from 480 nm to 640 nm, a change trend of the diffraction efficiency is relatively flat, and the diffraction efficiency is greater than 55%. Therefore, it can be obtained that, when the functional layer 40 is disposed on the couple-out grating 30, the diffraction efficiency of the diffraction grating structure 100 is enhanced.

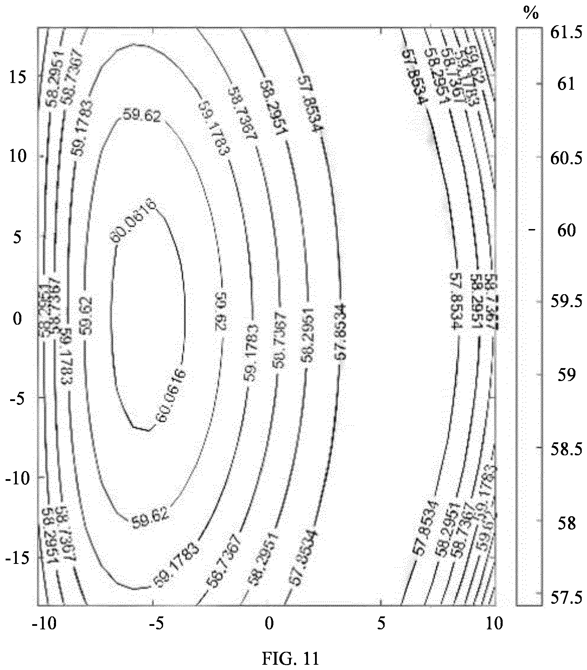

Further referring to FIG. 11, the abscissa represents the field-of-view distribution in the grating vector direction, specifically, from -10 degrees to +10 degrees, and the ordinate represents the field-of-view distribution perpendicular to the grating vector direction, specifically, from -18 degrees to +18 degrees. FIG. 11 reveals that, the maximum diffraction efficiency is 61.5%, and the minimum diffraction efficiency is 57.5%. Thus, based on the equation:

$$\text{uniformity error} = \frac{\text{maximum efficiency} - \text{minimum efficiency}}{\text{maximum efficiency} + \text{minimum efficiency}}$$

, the uniformity error of the couple-out grating 30 of the diffraction grating structure 100 is 0.03 when the zirconium oxide film layer serves as the functional layer 40. Compared with the diffraction grating structure without the functional layer 40, the couple-out grating 30 of the diffraction grating structure 100 adopting the titanium oxide film layer as the functional layer 40 has increased diffraction efficiency and lowered uniformity error. Thus, the uniformity of the brightness distribution of the generated virtual image can be improved.

To sum up, in the diffraction grating structure 100 according to the embodiments of the present disclosure, the specular reflection of the couple-out grating 30 can be increased by disposing the functional layer 40 on the blazed grating, and the functional layer 40 can cooperate with the waveguide sheet 10 and the couple-in grating to transmit the light, no matter whether the titanium oxide film layer or the zirconium oxide film layer is used as the functional layer 40. Compared with the diffraction grating structure without the functional layer, the diffraction grating structure 100 has increased diffraction efficiency and lowered uniformity error, which bring a uniform brightness distribution of the generated virtual image.

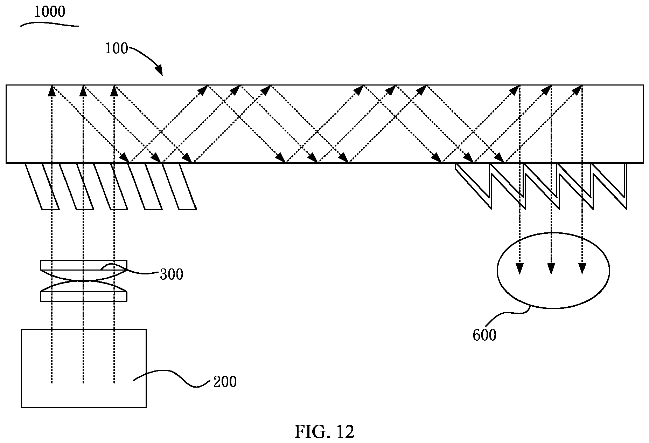

Referring to FIG. 12, the embodiments of the present disclosure further provide an imaging device 1000. The imaging device 1000 includes the diffraction grating structure 100 according to any of the above embodiments, an image generation module 200, and an optical module 300. With reference to FIG. 1, the image generation module 200 is opposite to the couple-in grating 20, and is configured to emit light toward the couple-in grating 20. The optical module 300 is disposed between the image generation module 200 and the couple-in grating 20, and is configured to adjust the light emitted by the image generation module 200 into parallel light at a predetermined angle to the couple-in grating 20.

In some embodiments, the image generation module 200 emits light towards the couple-in grating 20. The light passes through the optical module 300 during transmission. The optical module 300 collimates incident light into parallel light and outputs the parallel light to the couple-in grating 20 at the predetermined angle. The light is diffracted by the couple-in grating 20, and then transmitted in the waveguide sheet 10 to the couple-out grating 30 in a manner of total reflection. By disposing the functional layer 40 on the couple-out grating, the light that passes through the couple-out grating 30 and the functional layer 40 is diffracted and coupled out to the air, thereby obtaining a virtual image with a uniform brightness distribution. The virtual image can be observed by a human eye 600.

Further referring to FIG. 12 and FIG. 1, in an embodiment, the diffraction grating structure 100 in the imaging device 1000 includes one layer of waveguide sheet 10. The couple-in grating 20 and the couple-out grating 10 are distributed at two ends of the one layer of waveguide sheet 10, respectively, and they are configured to diffract and reflect red light, green light, and blue light.

In some embodiments, the image generation module 200 emits light towards the couple-in grating 20. The light passes through the optical module 300 during transmission. The optical module 300 collimates the incident light into parallel light and outputs the parallel light to the couple-in grating 20 at the predetermined angle. After the light is diffracted by the couple-in grating 20, the waveguide sheet 10 performs the total reflection on the light, coupled by the couple-in grating 20, of a corresponding wavelength, for example, red light, green light, and blue light, thereby transmitting the light to the couple-out grating 30. The functional layer 40 refracts the light coupled by the couple-out grating to the air. Since the functional layer 40 can increase a light-outcoupling rate of the couple-out grating 30, the virtual image with the uniform brightness distribution can be obtained. The virtual image can be observed by the human eye 600. In some embodiments, the couple-in grating 20 may be disposed on any surface of the waveguide sheet 10. In an example, the couple-in grating 20 may be disposed on an upper surface of the waveguide sheet 10, i.e., a surface facing away from the image generation module 200. In another example, the couple-in grating 20 may be disposed on a lower surface of the waveguide sheet 10, i.e., a surface facing towards the image generation module 200. Similarly, in some embodiments, the couple-out grating 30 may also be disposed on any surface of the waveguide sheet 10. In an example, the couple-out grating 30 may be disposed on the upper surface of the waveguide sheet 10, i.e., the surface facing away from the image generation module 200. In another example, the couple-out grating 30 may be disposed on the lower surface of the waveguide sheet 10, i.e., the surface facing towards the image generation module 200.

In addition, in some embodiments, the couple-in grating 20 and the couple-out grating 30 may be disposed on the same side of the waveguide sheet 10. In an example, both the couple-in grating 20 and the couple-out grating 30 may be disposed on the upper surface of the waveguide sheet 10, i.e., the surface facing away from the image generation module 200. In another example, both the couple-in grating 20 and the couple-out grating 30 may be disposed on the lower surface of the waveguide sheet 10, i.e., the surface facing towards the image generation module 200. In some other embodiments, the couple-in grating 20 and the couple-out grating 30 may be disposed on different sides of the waveguide sheet 10. In an example, the couple-in grating 20 may be disposed on the upper surface of the waveguide sheet 10, i.e., the surface facing away from the image generation module 200, while the couple-out grating 30 may be disposed on the lower surface of the waveguide sheet 10, i.e., the surface facing towards the image generation module 200. In another example, the couple-out grating 30 may be disposed on the upper surface of the waveguide sheet 10, i.e., the surface facing away from the image generation module 200, while the couple-in grating 20 may be disposed on the lower surface of the waveguide sheet 10, i.e., the surface facing towards the image generation module 200.

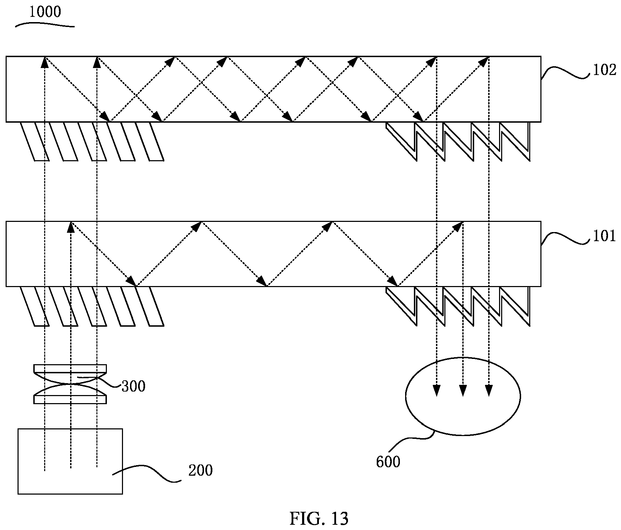

Referring to FIG. 13 and FIG. 1, in another embodiment, the diffraction grating structure 100 includes two layers of waveguide sheets 10. The couple-in grating 20 and the couple-out grating 30 are distributed at two ends of each of the two layers of waveguide sheets 10, respectively. The couple-in grating 20 and the couple-out grating 30 on one layer of the two layers of waveguide sheets 10 are configured to diffract and reflect one of red light, green light, and blue light. The couple-in grating 20 and the couple-out grating 30 on the other layer of the two layers of waveguide sheets 10 are configured to diffract and reflect the remaining two of red light, green light, and blue light.

In some embodiments, the image generation module 200 can emit light towards the couple-in grating 20. The light passes through the optical module 300 during transmission. The optical module 300 collimates the incident light into parallel light and outputs the parallel light to the couple-in grating 20 at the first layer of waveguide sheet 101 at the predetermined angle. The first layer of waveguide sheet 101 performs the total reflection on the light, coupled by the couple-in grating 20, of a corresponding wavelength, e.g., one of red light, green light, and blue light, to transmit the light to the couple-out grating 30 on the first layer of waveguide sheet 101. The couple-out grating 30 on the first layer of waveguide sheet 101 and the functional layer 40 couple and refract the total reflection light out to the air.

After the total reflection performed by the couple-in grating 20 on the first layer of waveguide sheet 101, the light that is not totally reflected enters the couple-in grating 20 on a second layer of waveguide sheet 102. The second layer of waveguide sheet 102 performs the total reflection on the light, coupled by the couple-in grating 20, of a corresponding wavelength, e.g., red and green light, red and blue light, or green and blue light, thereby ensuring the diffraction and reflection of each of red light, green light, and blue light. Then, the light is transmitted to the couple-out grating 30 on the second layer of waveguide sheet 102. The couple-out grating 30 on the second layer of waveguide sheet 102 and the functional layer 40 diffract and couple the total reflection light out to the air. A virtual image with a uniform brightness distribution is obtained by means of the light coupled out to the air by the couple-out grating 30 on the second layer of waveguide sheet 102 together with the light coupled out to the air by the couple-out grating 30 on the first layer of waveguide sheet 101. The virtual image can be observed by the human eye 600.

The couple-in grating 20 and the couple-out grating 30 on each layer of waveguide sheet 10 are disposed in the same manner as described above. For example, the couple-in grating 20 on each layer of waveguide sheet 10 may be disposed on any surface of the waveguide sheet 10, and the couple-out grating 30 on each layer of waveguide sheet 10 may be disposed on any surface of the waveguide sheet 10. The couple-in grating 20 and the couple-out grating 30 on the same layer of waveguide sheet 10 may be disposed on the same side or different sides of the waveguide sheet 10. The specific arrangement of the couple-in grating 20 and the couple-out grating 30 may refer to the above description, and will not be elaborated herein.

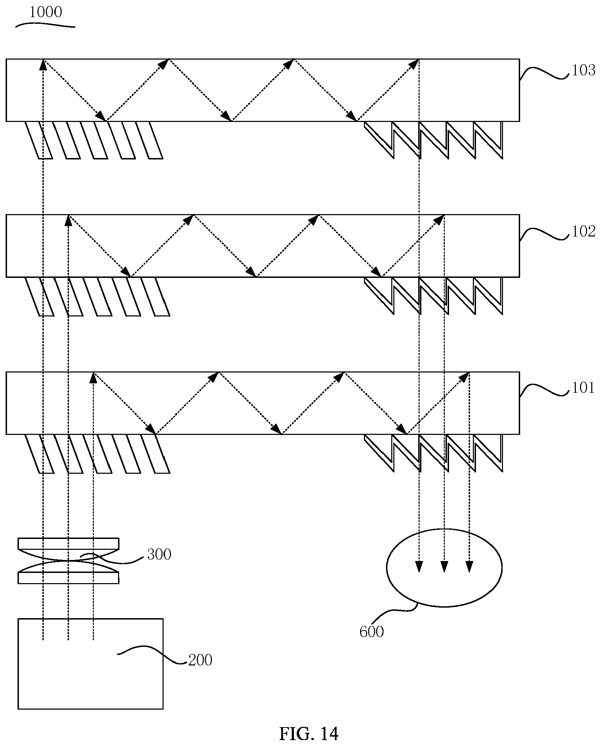

Referring to FIG. 14 and FIG. 1, in another embodiment, the diffraction grating structure 100 includes three layers of waveguide sheets 10. The couple-in grating 20 and the couple-out grating 30 are distributed at two ends of each layer of waveguide sheet 10, respectively. The couple-in grating 20 and the couple-out grating 30 on one layer of waveguide sheet 10 are configured to diffract and reflect one of red light, green light, and blue light. In this way, the couple-in gratings 20 and the couple-out gratings 30 on these three layers of waveguide sheets 10 can diffract and reflect red light, green light, and blue light, respectively.

In some embodiments, the image generation module 200 emits light towards the couple-in grating 20. The light passes through the optical module 300 during transmission. The optical module 300 collimates incident light into parallel light and outputs the parallel light to the couple-in grating 20 deposited on a lower side of the first layer of waveguide sheet 101 at the predetermined angle. The first layer of waveguide sheet 101 performs the total reflection on the light, coupled by the couple-in grating 20, of a corresponding wavelength, e.g., one of red light, green light, and blue light, to transmit the light to the couple-out grating 30 on the first layer of waveguide sheet 101. The couple-out grating 30 on the first layer of waveguide sheet 101 and the functional layer 40 couple and refract the total reflection light out to the air.

After the light passes through the couple-in grating 20 on the first layer of waveguide sheet 101 of the three layers of waveguide sheets 10, light that is not reflected enters the couple-in grating 20 on the second layer of waveguide sheet 102. The second layer of waveguide sheet 102 performs the total reflection on light, coupled by the couple-in grating 20, of a corresponding wavelength, e.g., another one of red light, green light, and blue light, to transmit another type of light to the couple-out grating 30 on the second layer of waveguide sheet 102. The couple-out grating 30 on the second layer of waveguide sheet 102 and the functional layer 40 diffract and couple the total reflection light out to the air.

After the light passes through the couple-in grating 20 disposed on a lower side of the second layer of waveguide sheet 101, light that is not reflected enters the couple-in grating 20 on the third layer of waveguide sheet 103. The third layer of waveguide sheet 103 performs the total reflection on light, coupled by the couple-in grating 20, of a corresponding wavelength, e.g., yet another one of red light, green light, and blue light, to transmit yet another type of light to the couple-out grating 30 on the third layer of waveguide sheet 102. The couple-out grating 30 on the third layer of waveguide sheet 102 and the functional layer 40 diffract and couple the total reflection light out to the air. A virtual image with a uniform brightness distribution can be obtained by means of the light coupled out to the air by the couple-out grating 30 on the third layer of waveguide sheet 103, together with the light coupled out to the air by the couple-out grating 30 on the first layer of waveguide sheet 101 and the couple-out grating 30 on the second layer of waveguide sheet 102. The virtual image can be observed by the human eye 600.

Similarly, the couple-in grating 20 and the couple-out grating 30 on each layer of waveguide sheet 10 are disposed in the same manner as described above. For example, the couple-in grating 20 on each layer of waveguide sheet 10 may be disposed on any surface of the waveguide sheet 10, and the couple-out grating 30 on each layer of waveguide sheet 10 may be disposed on any surface of the waveguide sheet 10. The couple-in grating 20 and the couple-out grating 30 on the same layer of waveguide sheet 10 may be disposed on the same side or different sides of the waveguide sheet 10. The specific arrangement of the couple-in grating 20 and the couple-out grating 30 may refer to the above description, and will not be elaborated herein.

In the imaging device 1000 according to the embodiments of the present disclosure, the functional layer 40 is disposed on the blazed grating to refract the light coupled out by the couple-out grating 30 to the ambient environment and increase the light-outcoupling rate of the couple-out grating 30, and the functional layer 40 cooperates with the waveguide sheet 10 and the couple-in grating 20 to transmit the light. Therefore, the diffraction efficiency of the diffraction grating structure 100 is increased, and the uniformity error of the diffraction grating structure 100 is lowered, which bring a uniform brightness distribution of the generated virtual images.

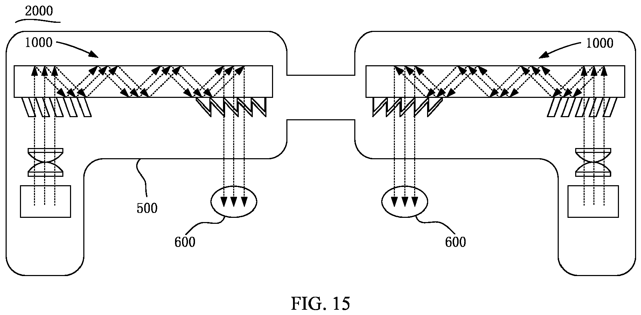

Referring to FIG. 15, the embodiments of the present disclosure further provide a wearable apparatus 2000. The wearable apparatus 2000 includes a housing 500, and the imaging device 1000 according to any one of the above embodiments. The imaging device 1000 is disposed on the housing 500.

The wearable apparatus 2000 may be a device such as a pair of intelligent glasses, a pair ofAR glasses, and a head-mounted sensing helmet, and other devices having a function of combining a virtual picture with a real scene. As an example, the present disclosure describes a pair ofAR glasses as the wearable apparatus 2000. It should be understood that a specific form of the wearable apparatus 2000 is not limited to the AR glasses.

In the wearable apparatus 2000 according to the embodiments of the present disclosure, the functional layer 40 is disposed on the blazed grating to refract the light coupled out by the couple-out grating 30 to the ambient environment and increase the light-outcoupling rate of the couple-out grating 30, and the functional layer 40 cooperates with the waveguide sheet 10 and the couple-in grating 20 to transmit the light. Therefore, the diffraction efficiency of the diffraction grating structure 100 is increased, and the uniformity error of the diffraction grating structure 100 is lowered, which bring a uniform brightness distribution of the generated virtual images.

Throughout this specification, phrase "some embodiments," "an example," or "for example" means that a particular feature, structure, material, or characteristic described in connection with the embodiment or example is included in at least one embodiment or example of the present disclosure. The appearances of the above phrases throughout this specification are not necessarily referring to the same embodiment or example. Furthermore, the specific features, structures, materials, or characteristics may be combined in any suitable manner in one or more embodiments or examples. In addition, different embodiments or examples and features of different embodiments or examples described in the specification may be combined by those skilled in the art without mutual contradiction.

Any process or method described in the flowchart or described in other manners can be understood as a module, segment or part of codes that include one or more executable instructions for implementing steps of specific logical functions or processes. It can be appreciated by those skilled in the art that the scope of the preferred embodiments of the present disclosure includes additional implementations where functions may not be performed in the order as illustrated or discussed, including implementations where the involved functions are performed substantially in parallel or even in a reverse order.

It should be understood that the embodiments of the present disclosure as illustrated and described are exemplary and should not be construed as limitations of the present disclosure. Those skilled in the art can make changes, modifications, substitutions, and alternations to the above-mentioned embodiments within the scope of the present disclosure.

**Claims**

1. A diffraction grating structure, comprising:

   a waveguide sheet;
   a couple-in grating disposed at a first end of the waveguide sheet and comprising a tilted grating;
   a couple-out grating disposed at a second end of the waveguide sheet and comprising a blazed grating, the first end and the second end being two opposite ends of the waveguide sheet; and
   a functional layer disposed on the couple-out grating, wherein:

      the couple-in grating is configured to couple light in the waveguide sheet;
      the waveguide sheet is configured to transmit the light coupled in the waveguide sheet by the couple-in grating to the couple-out grating;
      the couple-out grating is configured to couple the light in the waveguide sheet out to the functional layer; and
      the functional layer is configured to refract the light coupled out by the couple-out grating to an ambient environment and increase a light-outcoupling rate of the couple-out grating.

2. The diffraction grating structure according to claim 1, wherein:

   a period of the couple-out grating ranges from 300 nm to 500 nm; and/or
   a blaze angle of the couple-out grating ranges from 5 degrees to 40 degrees; and/or
   an anti-blaze angle of the couple-out grating ranges from 50 degrees to 85 degrees.

3. The diffraction grating structure according to claim 1, wherein the functional layer comprises a high refractive index film layer, wherein:

a refractive index of the functional layer is greater than or equal to 1.8; and/or
a thickness of the functional layer ranges from 20 nm to 150 nm.

4. The diffraction grating structure according to claim 1, wherein the functional layer comprises a titanium oxide film layer or a zirconium oxide film layer.

5. The diffraction grating structure according to claim 4, wherein when the functional layer comprises the titanium oxide film layer, a thickness of the functional layer is 90 nm.

6. The diffraction grating structure according to claim 4, wherein when the functional layer comprises the zirconium oxide film layer, a thickness of the functional layer is 110 nm.

7. The diffraction grating structure according to any one of claims 1 to 6, comprising three layers of waveguide sheets, wherein:

the couple-in grating and the couple-out grating are distributed at two ends of each of the three layers of waveguide sheets, respectively; and
the couple-in grating and the couple-out grating on each of the three layers of waveguide sheets are configured to diffract and reflect one of red light, green light, and blue light, to allow the couple-in gratings and the couple-out gratings on the three layers of waveguide sheets to diffract and reflect red light, green light, and blue light, respectively.

8. The diffraction grating structure according to any one of claims 1 to 6, comprising two layers of waveguide sheets, wherein:

the couple-in grating and the couple-out grating are distributed at two ends of each of the two layers of waveguide sheets, respectively;
the couple-in grating and the couple-out grating on one layer of the two layers of waveguide sheets are configured to diffract and reflect one of red light, green light, and blue light; and
the couple-in grating and the couple-out grating on the other layer of the two layers of waveguide sheets are configured to diffract and reflect remaining two of red light, green light, and blue light.

9. The diffraction grating structure according to any one of claims 1 to 6, comprising one layer of waveguide sheet, wherein:
the couple-in grating and the couple-out grating are distributed at two ends of the one layer of waveguide sheet, respectively, and configured to diffract and reflect red light, green light, and blue light.

10. The diffraction grating structure according to any one of claims 7 to 9, wherein:

the couple-in grating and the couple-out grating are disposed on a same side of the waveguide sheet; or
the couple-in grating and the couple-out grating are disposed on different sides of the waveguide sheet.

11. An imaging device, comprising:

a waveguide sheet;
a couple-in grating disposed at a first end of the waveguide sheet and comprising a tilted grating;
a couple-out grating disposed at a second end of the waveguide sheet and comprising a blazed grating, the first end and the second end being two opposite ends of the waveguide sheet;
a functional layer disposed on the couple-out grating, wherein the couple-in grating is configured to couple light in the waveguide sheet, the waveguide sheet is configured to transmit the light coupled in the waveguide sheet by the couple-in grating to the couple-out grating, the couple-out grating is configured to couple the light in the waveguide sheet out to the functional layer, and the functional layer is configured to refract the light coupled out by the couple-out grating to an ambient environment and increase a light-outcoupling rate of the couple-out grating;
an image generation module opposite to the couple-in grating and configured to emit light towards the couple-in grating; and
an optical module disposed between the image generation module and the couple-in grating, and configured to adjust the light emitted by the image generation module into parallel light at a predetermined angle to the couple-in grating.

12. The imaging device according to claim 11, wherein:

a period of the couple-out grating ranges from 300 nm to 500 nm; and/or
a blaze angle of the couple-out grating ranges from 5 degrees to 40 degrees; and/or
an anti-blaze angle of the couple-out grating ranges from 50 degrees to 85 degrees.

13. The imaging device according to claim 11, wherein the functional layer comprises a high refractive index film layer, wherein:

a refractive index of the functional layer is greater than or equal to 1.8; and/or
a thickness of the functional layer ranges from 20 nm to 150 nm.

14. The imaging device according to claim 11, wherein the functional layer comprises a titanium oxide film layer or a zirconium oxide film layer.

15. The imaging device according to claim 14, wherein when the functional layer comprises the titanium oxide film layer, the thickness of the functional layer is 90 nm.

16. The imaging device according to claim 14, wherein when the functional layer comprises the zirconium oxide film layer, the thickness of the functional layer is 110 nm.

17. The imaging device according to any one of claims 11 to 16, wherein:

a diffraction grating structure comprises three layers of waveguide sheets;
the couple-in grating and the couple-out grating are distributed at two ends of each of the three layers of waveguide sheets, respectively; and
the couple-in grating and the couple-out grating on each of the three layers of waveguide sheets are configured to diffract and reflect one of red light, green light, and blue light, to allow the couple-in gratings and the couple-out gratings on the three layers of waveguide sheets to diffract and reflect red light, green light, and blue light, respectively.

18. The imaging device according to any one of claims 11 to 16, wherein:

a diffraction grating structure comprises two layers of waveguide sheets;
the couple-in grating and the couple-out grating are distributed at two ends of each of the two layers of waveguide sheets, respectively;
the couple-in grating and the couple-out grating on one layer of the two layers of waveguide sheets are configured to diffract and reflect one of red light, green light, and blue light; and
the couple-in grating and the couple-out grating on the other layer of the two layers of waveguide sheets are configured to diffract and reflect remaining two of red light, green light, and blue light.

19. The imaging device according to any one of claims 11 to 16, wherein:

a diffraction grating structure comprises one layer of waveguide sheet; and
the couple-in grating and the couple-out grating are distributed at two ends of the one layer of waveguide sheet, respectively, and configured to diffract and reflect red light, green light, and blue light.

20. The imaging device according to any one of claims 17 to 19, wherein:

the couple-in grating and the couple-out grating are disposed on a same side of the waveguide sheet; or
the couple-in grating and the couple-out grating are disposed on different sides of the waveguide sheet.

21. A wearable apparatus, comprising:

a housing; and
the imaging device according to any one of claims 11 to 20, wherein the imaging device is disposed on the housing.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

1000

FIG. 14

FIG. 15

### INTERNATIONAL SEARCH REPORT

| International application No. |
| --- |
| **PCT/CN2021/114215** |

**A. CLASSIFICATION OF SUBJECT MATTER**

G02B 6/00(2006.01)i; G02B 5/18(2006.01)i; G02B 27/01(2006.01)i

According to International Patent Classification (IPC) or to both national classification and IPC

**B. FIELDS SEARCHED**

Minimum documentation searched (classification system followed by classification symbols)

G02B6/00; G02B5/18; G02B27/01

Documentation searched other than minimum documentation to the extent that such documents are included in the fields searched

Electronic data base consulted during the international search (name of data base and, where practicable, search terms used)

CNTXT; WPABS; ENTXT; DWPI; VEN; CNKI: 波导, 光栅, 衍射, 虚拟成像, 增强现实, 立体成像, 倾斜光栅, 闪耀光栅, grating?, VR, waveguide?, blazed grating?, diffraction grating?, coupled grating

**C. DOCUMENTS CONSIDERED TO BE RELEVANT**

| Category* | Citation of document, with indication, where appropriate, of the relevant passages | Relevant to claim No. |
| --- | --- | --- |
| PX | CN 112130246 A (GUANGDONG OPPO MOBILE TELECOMMUNICATIONS CORP., LTD.) 25 December 2020 (2020-12-25) description, paragraphs [0026]-[0066], and figures 1-15 | 1-21 |
| X | CN 109696717 A (SHENZHEN LOCHN OPTICS TECHNOLOGY CO., LTD.) 30 April 2019 (2019-04-30) description, paragraphs [0020]-[0055], and figures 1-8 | 1-21 |
| Y | CN 110764260 A (HUAWEI TECHNOLOGIES CO., LTD.) 07 February 2020 (2020-02-07) description, paragraphs [0040]-[0043], and figures 1-10 | 1-21 |
| Y | CN 210835313 U (SUZHOU SUDA WEIGE TECHNOLOGY GROUP CO., LTD. et al.) 23 June 2020 (2020-06-23) description, paragraphs [0043]-[0060], and figures 1-7 | 1-21 |
| A | CN 105765421 A (CSEM CENTRE SUISSE D'ELECTRONIQUE ET DE MICROTECHNIQUE SA-RECHERCHE ET DEVELOPPEMENT) 13 July 2016 (2016-07-13) entire document | 1-21 |
| A | CN 111474711 A (GOOLTON TECHNOLOGY CO., LTD.) 31 July 2020 (2020-07-31) entire document | 1-21 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 November 2021** | **17 November 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/114215**

### C. DOCUMENTS CONSIDERED TO BE RELEVANT

| Category* | Citation of document, with indication, where appropriate, of the relevant passages | Relevant to claim No. |
|-----------|-----------------------------------------------------------------------------------|------------------------|
| A | US 2019227321 A1 (FACEBOOK TECH LLC.) 25 July 2019 (2019-07-25)<br>entire document | 1-21 |
| A | US 2020271847 A1 (TOOZ TECHNOLOGIES GMBH) 27 August 2020 (2020-08-27)<br>entire document | 1-21 |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| CN | 112130246 | A | 25 December 2020 | CN | 213149295 | U | 07 May 2021 |
| CN | 109696717 | A | 30 April 2019 | WO | 2020177224 | A1 | 10 September 2020 |
| | | | | CN | 209624815 | U | 12 November 2019 |
| CN | 110764260 | A | 07 February 2020 | | None | | |
| CN | 210835313 | U | 23 June 2020 | CN | 112415656 | A | 26 February 2021 |
| CN | 105765421 | A | 13 July 2016 | WO | 2015062641 | A1 | 07 May 2015 |
| | | | | BR | 112016009211 | A2 | 10 November 2020 |
| | | | | US | 2016274281 | A1 | 22 September 2016 |
| | | | | US | 9557458 | B2 | 31 January 2017 |
| | | | | EP | 3063570 | A1 | 07 September 2016 |
| | | | | EP | 3063570 | B1 | 17 March 2021 |
| | | | | CN | 105765421 | B | 09 July 2019 |
| CN | 111474711 | A | 31 July 2020 | CN | 211826729 | U | 30 October 2020 |
| | | | | CN | 111474711 | B | 06 April 2021 |
| US | 2019227321 | A1 | 25 July 2019 | US | 10761330 | B2 | 01 September 2020 |
| US | 2020271847 | A1 | 27 August 2020 | DE | 102017122353 | A1 | 28 March 2019 |
| | | | | WO | 2019063291 | A1 | 04 April 2019 |

International application No.

**PCT/CN2021/114215**

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011091220
- CN 202022275408